# EUROPÄISCHE PATENTANMELDUNG

(11) **EP 4 763 365 A1**
(43) Veröffentlichungstag der Anmeldung: **24.06.2026**
(21) Anmeldenummer: 24383432.2
(22) Anmeldetag: 20.12.2024
(51) Int. Cl.: B07C 5/342, B65G 11/16

(54) **SORTIERANLAGE UND VERFAHREN ZU DEREN REINIGUNG, SOWIE RUTSCHEINLAGE**

(71) Anmelder: Alpla-Werke Alwin Lehner GMBH & Co.KG, 6971 Hard (AT)
(72) Erfinder: Cody Borchers, Bryan, 52511 Geilenkirchen (DE); Berger, Manuel, 3170 Hainfeld (AT); Soto, Augustin, 08402 Barcelona (ES)
(74) Vertreter: Bohest AG Branch Ostschweiz

(57) **Zusammenfassung**

Offenbart ist eine Sortieranalage zum Entfernen von unerwünschten Elementen (21) aus einem Produktstrom (20). Die Sortieranlage umfasst eine Zufuhreinrichtung (30), eine Rutscheinrichtung (40) sowie eine Detektionseinrichtung (50). Die Rutscheinrichtung (40) weist einen Rutschenträger (41) sowie eine den Rutschenträger (41) vollständig abdeckende Rutscheneinlage (42) auf.

## Beschreibung

Die vorliegende Erfindung betrifft eine Sortieranlage und ein Verfahren zu deren Reinigung gemäss dem Oberbegriff der unabhängigen Ansprüche.

Aus dem Stand der Technik ist eine Vielzahl an Sortieranlagen bekannt. Diese werden typischerweise eingesetzt, um einen heterogenen Produktstrom zu verarbeiten und unerwünschte Elemente auszusortieren, sodass am Ende ein homogener Produktstrom entsteht. Der Produktstrom kann beispielsweise in Bezug auf seine Zusammensetzung heterogen sein, also beispielsweise unterschiedliche Werkstoffe enthalten. Er kann aber auch in Bezug auf eine jeweilige Grösse von einzelnen Elementen inhomogen sein oder beispielsweise auch in Bezug auf die Qualität von einzelnen Elementen.

Häufig ist jedoch auch eine Mischung von unterschiedlichen unerwünschten Elementen und/oder Eigenschaften anzutreffen.

Der Produktstrom liegt meist als ein Gemisch aus Körnern, wie beispielsweise Getreide, oder ein Gemisch aus Flocken, Granulat oder Pellets vor.

Insbesondere bei Recyclingprozessen werden derartige Sortieranlagen eingesetzt. Im Kunststoffrecycling umfasst der Produktstrom dabei meist geschredderte Kunststoffteile, welche vor dem Schreddern einer Vorsortierung unterzogen wurden. Diese ist meist nicht vollständig und teilweise ungenau. Zudem ist insbesondere bei Kunststoffflaschen als Ursprungsprodukt häufig eine Anhaftung von Schmutz oder Resten von Etiketten anzutreffen.

Im besten Fall umfasst der Produktstrom in diesem Fall nur Kunststoffe der gleichen Sorte. In der Praxis ist dies aber nie der Fall und unerwünschte Elemente, beispielsweise aus anderen Werkstoffen, befinden sich im Produktstrom. Werden diese Elemente nicht aussortiert, ist das Rezyklat unbrauchbar oder von minderer Qualität. Entsprechend wird versucht, diese unerwünschten Elemente mit einer Sortieranlage aus dem Produktstrom zu entfernen. Dabei wird das Produkt, beispielsweise Granulat, in einem Rüttler bereitgestellt und entsprechend aufgelockert und als Produktstrom einer Rutsche übergeben. Am Ende der Rutsche werden die einzelnen Bestandteile des Produktestroms optisch erfasst und unerwünschte Elemente beispielsweise mittels eines gezielten Luftstosses aussortiert.

Bei der Aussortierung derartiger unerwünschter Elemente in Sortieranlagen bleiben die ursprünglichen Anhaftungen häufig in der Sortieranlage zurück und verschmutzen diese. Dies verlangsamt unter Umständen den Produktstrom und einzelne Bestanteile fangen beispielsweise an, zu springen oder sie bekommen einen unruhigen Lauf, da sie während des Rutschens auf Ablagerungen von Schmutz auftreffen können. Die Aussortierung mittels Luftstoss ist im Anschluss weniger präzise, da die auszusortierenden Bestandteile andere Laufzeiten oder Rutschzeiten haben, also der Zeitraum von der Detektion zum theoretischen Ausstosspunkt verlängert wird. Zudem kann es auch vorkommen, dass die Fallkurven von den optimalen Fallkurven abweichen. Zwischen dem Punkt, in welchem ein unerwünschtes Element erkannt wird und dem Punkt, in welchem dieses Element ausgestossen wird, liegen meist nur wenige cm oder mm. Ein ordentlicher Austrag ergibt sich aus der Position aufgelöst nach einer Koordinate x/y und der Zeit, bis das unerwünschte Element auf Höhe des Austrages ankommt. Wenn sich nun, aufgrund einer Verschmutzung, die Position zwischen der Erkennung und dem Austrag verändert, kommt kein ordentlicher Austrag zustande.

Damit dies verhindert werden kann, müssen die Sortieranlagen und insbesondere die Rutschen aufwändig und meist in kurzen Zeitintervallen gereinigt werden. Dies bedingt typischerweise, dass die Sortieranlage auseinandergenommen und die Rutsche entfernt und gereinigt wird. Durch herumspringende Elemente innerhalb der Maschine, werden auch Optiken in der Sortieranlage verschmutzt, welche ebenfalls gereinigt werden müssen. Entsprechend lang sind die Stillstandzeiten.

Es ist Aufgabe der Erfindung einen oder mehrere Nachteile des Standes der Technik zu beheben. Insbesondere soll eine Vorrichtung geschaffen werden, die Stillstandzeiten einer Sortieranlage verringert und insbesondere eine Reinigung vereinfacht.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Eine erfindungsgemässe Vorrichtung ist als eine Sortieranlage, insbesondere als eine optische Sortieranlage, zum Entfernen von unerwünschten Elementen aus einem Produktstrom ausgebildet. Die Sortieranlage umfasst eine Zufuhreinrichtung, eine Rutscheinrichtung sowie eine Detektionseinrichtung. Die Rutscheinrichtung weist einen Rutschenträger sowie eine den Rutschenträger vollständig abdeckende Rutscheneinlage auf.

Die Rutscheinrichtung ist vorliegend zweiteilig aufgebaut, nämlich aus einem Rutschenträger sowie einer Rutscheneinlage. Durch diesen zweiteiligen Aufbau ist es möglich, die Rutscheneinlage aus der Rutscheinrichtung zu entfernen, ohne die Sortieranlage auseinanderzunehmen, beziehungsweise teilweise zu demontieren.

Insbesondere ist es auch möglich, die Rutscheneinlage im laufenden Betrieb zu entfernen, ohne den Materialfluss zu unterbrechen. Dies bietet sich insbesondere dann an, wenn es sich um kleinere Anlagen handelt, die leicht zugänglich sind, oder bei Anlagen, die Teil einer Verarbeitungsstrasse sind und deren Abschaltung die Abschaltung der ganzen Verarbeitungsstrasse nach sich ziehen würde.

Durch die Bereitstellung eines Rutschenträgers kann die Rutscheneinlage beispielsweise ebenfalls leichter gefertigt werden, was es ermöglicht, die Rutscheneinlage von Hand, also ohne technische Zusatzmittel, aus der Sortieranlage zu entfernen.

Der zu reinigende Produktstrom besteht im Wesentlichen aus Flocken, Granulat oder Pellets aus Kunststoff, oder auch aus einer Mischung von Flocken, Granulat oder Pellets. Der Kunststoff ist vorzugsweise PE, PP oder PET. Die unerwünschten Elemente im Produktstrom sind typischerweise aus einem, zum Material der Flocken, des Granulats oder der Pellets unterschiedlichen, Material.

Mit anderen Worten umfasst der Produktstrom Flocken, Granulat und/oder Pellets des Kunststoffs sowie in geringen Mengen anders geformte Partikel desselben Kunststoffs sowie anders geartete Fremdstoffe, welche aussortiert werden sollen.

Der Rutschenträger weist vorzugsweise einen Querschnitt auf, der U-förmig ist. Der U-förmige Querschnitt ist gebildet aus einer Grundplatte und zwei Seitenwandungen. Dies ermöglicht es, dass die Rutscheneinlage ohne zusätzliche Elemente an einer zum Rutschenträger definierten Position gehalten ist und die Rutscheneinlage entsprechend abgestützt ist.

Vorzugsweise weist die Rutscheneinlage einen zum Querschnitt des Rutschenträgers geometrisch ähnlichen Querschnitt auf. Entsprechend weist der Querschnitt der Rutscheneinlage ebenfalls eine Grundplatte und zwei Seitenwandungen auf, sodass innenliegende Oberflächen des Rutschenträgers überdeckt sind.

Vorzugsweise ist eine Ausnahmemessung der Rutscheneinlage um 1 mm bis 3 mm kleiner als eine Innenabmessung des Rutschenträgers, wobei insbesondere die Seitenwandungen der Rutscheneinlage die Seitenwandungen des Rutschenträgers zu mindestens 90 % abdecken.

In Richtung der Förderrichtung des Produktstroms weist der Rutschenträger und die Rutscheneinlage je eine Länge auf. Vorzugsweise ist die Länge der Rutscheneinlage höchstens 10 mm, insbesondere höchstens 5 mm, kürzer als die Länge des Rutschenträgers, vorzugsweise jedoch gleich lang oder länger als die Länge des Rutschenträgers, wobei die Rutscheneinlage den Rutschenträger in Förderrichtung um höchstens 10 mm, vorzugsweise um höchstens 5 mm überragt.

Die Grundplatte der Rutscheneinlage ist vorzugsweise eben. Eben heisst hier, dass sich die Oberfläche der Grundplatte in einer einzigen flachen Ebene erstreckt, die Grundplatte insbesondere keine Erhebungen und/oder Vertiefungen aufweist.

Dies führt dazu, dass der Produktstrom einen gleichmässigen Fluss aufweist und einzelne Bestandteile des Produktstroms gleichmässig und ungehindert entlang der Rutscheneinlage fliessen können. Ein weiterer Effekt ist, dass sich durch eine derartige Ausbildung Schmutzpartikel weniger an der Rutscheneinlage festsetzen können.

Die Rutscheinrichtung ist vorzugsweise derart ausgebildet, dass sämtliche auf die Rutscheinrichtung einwirkende Kraft durch den Rutschenträger aufgenommen wird und die Rutscheneinlage im Wesentlichen keine äusseren Kräfte aufnimmt.

Dies ermöglicht es, die Rutscheneinlage beispielsweise aus einem sehr dünnen Blech zu fertigen und auf den Rutschenträger aufzulegen. Durch die entsprechende Ausbildung des Rutschenträgers kann ein Durchhängen der Rutscheneinlage oder beispielsweise ein Schwingen oder Vibrieren verhindert werden, ohne dass die Rutscheneinlage massiv ausgeführt werden muss.

Die Rutscheneinlage kann eine Befestigungsvorrichtung aufweisen. Durch eine entsprechende Befestigungsvorrichtung kann die Rutscheneinlage in einem entsprechenden Rutschenträger und/oder beispielsweise in einer bestehenden Rutsche einer bestehenden Sortieranlage befestigt werden, ohne dass an dem Rutschenträger oder an der bestehenden Rutsche zusätzliche Befestigungselemente vorgesehen sein müssen.

Die Befestigungsvorrichtung kann in der Form einer Lasche, eines Hakens oder einer abgewinkelten Aufhängung ausgebildet sein.

Dies ermöglicht es, die Rutscheneinlage in einen entsprechenden Rutschenträger einzusetzen, wobei die Rutscheneinlage beispielsweise an einem oberen Rand des Rutschenträgers eingehängt wird. Dies und insbesondere die geometrisch ähnliche Ausbildung der beiden Elemente sorgen dafür, dass die Rutscheneinlage auf dem Rutschenträger stabil gehalten wird und einfach sowie reproduzierbar ausgetauscht werden kann.

Es kann vorgesehen sein, dass die Rutscheneinlage eine zweite Befestigungsvorrichtung zum Befestigen einer Absaugvorrichtung aufweist.

Insbesondere wenn ältere Sortieranlagen aufgerüstet werden, kann es vorkommen, dass weitere Elemente, die zuvor an einer Rutsche der Sortieranlage angebracht waren, neu befestigt werden müssen. Oft gibt es Sortieranlagen mit einer Absaugvorrichtung, welche beispielsweise Dämpfe oder Staub aus dem Produktstrom entfernt. Entsprechend kann durch eine zweite Befestigungsvorrichtung an der Rutscheneinlage eine Absaugvorrichtung einer bestehenden Anlage weiterverwendet werden und einfach befestigt werden.

Die Rutscheneinlage ist vorzugsweise aus einem metallischen Werkstoff, insbesondere aus Edelstahl, gefertigt. Vorzugsweise weist der metallische Werkstoff eine Härte nach Vickers auf die mindestens 80 ist

Zusätzlich oder alternativ kann vorgesehen sein, dass die Rutscheneinlage eine Oberflächenbeschichtung aufweist, insbesondere aus Polytetrafluorethylen (PTFE). Eine derartige Oberflächenbeschichtung erhöht einerseits die Gleitfähigkeit, andererseits wird das Ablagern von Schmutz verhindert oder zumindest verzögert.

Ebenfalls wäre es vorstellbar, die Rutscheneinlage vollständig aus PTFE herzustellen.

Zusätzlich oder alternativ kann vorgesehen sein, die Rutscheneinlage, insbesondere die Grundplatte der Rutscheneinlage, mit sich in Förderrichtung erstreckenden Erhebungen oder Vertiefungen zu versehen. Dies ermöglicht es, den Produktstrom einerseits zu kanalisieren, daher in eine Richtung zu lenken, andererseits kann eine Kontaktfläche zu dem Produktstrom vermindert werden. Falls derartige Elemente vorgesehen sind, erstrecken sich diese über eine Länge von mindestens 90% des Rutschenträgers, insbesondere über mindestens 95% und vorzugsweise über die volle Länge der Rutscheneinlage und bilden eine gemeinsame Ebene.

Ein weiterer Aspekt betrifft ein Verfahren zum Reinigen einer Sortieranlage, insbesondere einer Sortieranlage wie vorliegend beschrieben. Die Sortieranlage umfasst eine Rutscheinrichtung mit einem Rutschenträger sowie eine den Rutschenträger vollständig abdeckende Rutscheneinlage. Das Verfahren umfasst die Schritte:
- Herunterfahren der Sortieranlage
- Entfernen der verschmutzten Rutscheneinlage
- Einbringen einer sauberen Rutscheneinlage
- Hochfahren der Sortieranlage.

Dies ermöglicht es, den abgelagerten Schmutz in einem Arbeitsgang zu entfernen, ohne an der Anlage selbst aufwändige Reinigungsarbeiten ausführen zu müssen.

Alternativ kann die Sortieranlage derart angehalten werden, dass lediglich der Produktstrom unterbrochen oder gestoppt wird und nicht die ganze Sortieranlage heruntergefahren wird.

In einer weitern alternativen Variante kann die Sortieranlage gestoppt werden, ohne vollständig heruntergefahren zu werden.

In einer weiteren Alternative kann vorgesehen sein, die verschmutzte Rutscheinlage im laufenden Betrieb zu entfernen und entsprechend im laufenden Betrieb eine saubere Rutscheneinlage einzubringen. Dies ist einerseits eine sehr schnelle Alternative, andererseits gibt es jedoch zumindest eine Zeitspanne, in welcher der Produktstrom auf dem Rutschenträger fliesst und daher dieser verschmutzen kann. Der Austausch im laufenden Betrieb hat zur Folge, dass unter Umständen nach längerem Betrieb der Rutschenträger gereinigt werden muss.

Vorzugsweise wird die entfernte Rutscheneinlage im Anschluss gereinigt und zur erneuten Verwendung als saubere Rutscheneinlage bereitgestellt.

Das Entfernen des abgelagerten Schmutzes kann damit unabhängig vom Betriebszustand der Sortieranlage erfolgen. Dies ermöglicht auch beispielsweise den Einsatz von Reinigungsmitteln, welche innerhalb der Sortieranlage nicht verwendet werden können, beispielsweise entsprechende Chemikalien oder der Einsatz von Hochdruckreinigern.

Ein weiterer Aspekt betrifft eine Rutscheneinlage zum Aufrüsten einer bestehenden Sortieranlage. Die Rutscheneinlage weist einen zu einer Rutsche der bestehenden Sortieranlage geometrisch ähnlichen Querschnitt auf. Insbesondere weist die Rutscheneinlage eine Befestigungsvorrichtung zum Befestigen an der Rutsche der bestehenden Sortieranlage auf, vorzugsweise wie vorliegend beschrieben.

Dies ermöglicht das einfache und kostengünstige Aufrüsten von bestehenden Sortieranlagen.

Anhand von schematischen Figuren wird die Erfindung nachfolgend erläutert. Es zeigt:
- Figur 1:: den prinzipiellen Aufbau einer Sortieranlage;
- Figur 2:: eine Rutscheneinlage.

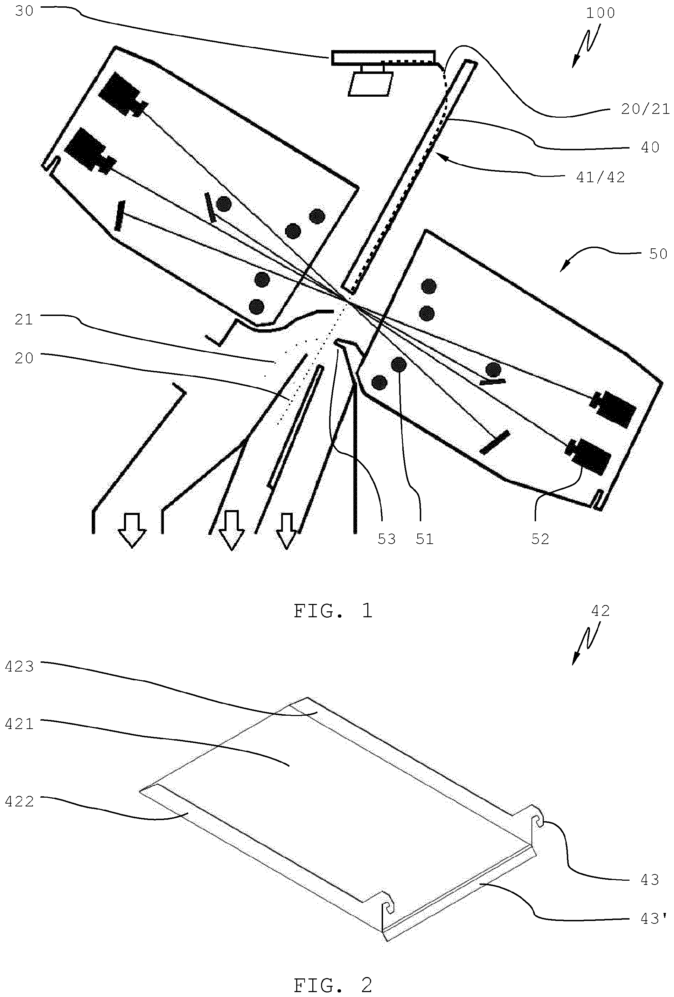

Figur 1 zeigt den prinzipiellen Aufbau einer Sortieranlage 100. Die Sortieranlage 100 weist eine Zufuhreinrichtung 30, eine Rutscheinrichtung 40 sowie eine Detektionseinrichtung 50 auf.

Die Zufuhreinrichtung 30 ist als eine Rüttelrinne ausgebildet. Das zu sortierende Produkt wird auf der Zufuhreinrichtung 30 bereitgestellt und der Rutscheinrichtung 40 übergeben, es bildet sich ein Produktstrom 20, der unerwünschte Elemente 21 enthält. Die Rutscheinrichtung 40 umfasst einen Rutschenträger 41 sowie eine Rutscheneinlage 42, welche in dieser Darstellung beide nicht näher dargestellt sind. Es versteht sich von selbst, dass die Rutscheinrichtung 40 auch für Sortieranlagen eingesetzt werden kann, die sich von der hier gezeigten optischen Sortieranlage 100 unterscheiden.

Der Produktstrom 20 rutscht die Rutscheinrichtung 40 hinunter in Richtung der Detektionseinrichtung 50. Diese umfasst Beleuchtungseinrichtungen 51 und Kameras 52, welche den Produktstrom kontinuierlich überwachen. Sobald ein unerwünschtes Element 21 detektiert wird, wird ein Signal generiert, welches eine Ausblasdüse 53 aktiviert, welche das unerwünschte Element 21 aus dem Produktstrom 20 bläst. Befindet sich nun Schmutz auf der Rutscheinrichtung 40, so kann es vorkommen, dass sich eine Flugbahn des unerwünschten Elementes 21 verändert und der Luftstoss aus der Ausblasdüse 53 dieses nicht oder nur ungenügend trifft. Die Rutscheinrichtung 40 muss daher gereinigt werden.

Zum Reinigen genügt es, die Sortieranlage 100 abzuschalten und die verschmutze Rutscheneinlage 42 zu entfernen und mit einer sauberen Rutscheneinlage 42' zu ersetzen.

Die Figur 2 zeigt eine Rutscheneinlage 42 mit zwei unterschiedlichen Befestigungseinrichtungen 43 und 43'. In einer ersten Form ist die Befestigungseinrichtung 43 als zwei Haken ausgebildet, in einer zweiten Form ist die Befestigungseinrichtung 43' als eine abgewinkelte Aufhängung ausgebildet. Bei letzterer Form kann die Rutscheneinlage 42 einfach an einer bestehenden Rutsche, beziehungsweise an einem bestehenden Rutschenträger befestigt werden. Es versteht sich, dass typischerweise nur eine der beiden Formen an der Rutscheneinlage 43 ausgebildet ist.

Die Rutscheneinlage 42 weist einen U-förmigen Querschnitt auf. Dieser ist aufgebaut aus einer Grundplatte 421 sowie zwei Seitenwandungen 422 und 423.

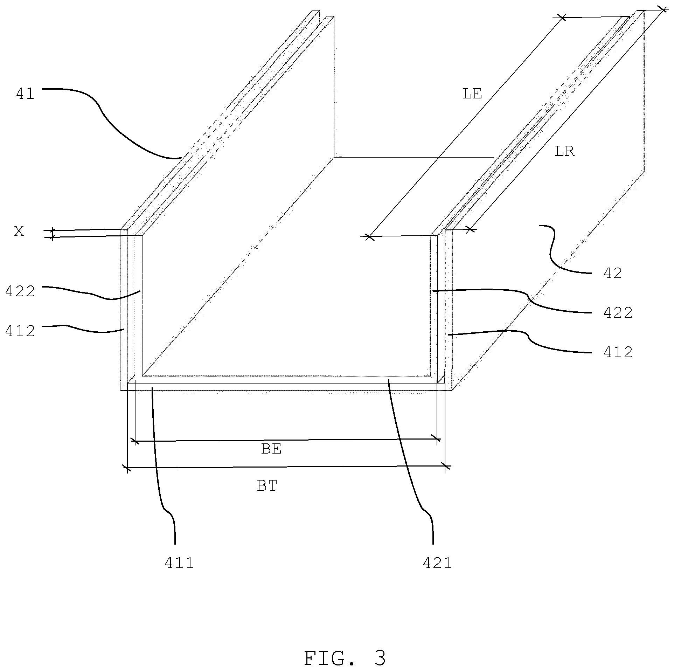

Die Figur 3 zeigt eine Rutscheneinlage 42 die in oder auf einem entsprechenden Rutschenträger 41 angeordnet ist in einer verkürzten Darstellung. Der Rutschenträger 41 weist eine Grundplatte 411 und zwei Seitenwandungen 412 auf. Die Rutscheneinlage 42 weist eine entsprechenden Grundplatte 421 sowie zwei Seitenwandungen 422 auf. Die Querschnitte sind im Wesentlichen geometrisch ähnlich. Der Rutschenträger 41 weist einen lichten Querschnitt mit einer Breite BT auf. Die Rutscheneinlage 42 weist einen äussere Abmessung BE auf, die geringer ist als die Breite BT. Die Breite BE ist 1 mm bis 5 mm kleiner als die Breite BT. Damit kann die Rutscheneinlage 42 mühelos in den Rutschenträger 41 eingebracht werden. Dennoch ist eine genaue Positionierung ermöglicht.

Der Rutschenträger 41 weist eine Länge LR auf und die Rutscheneinlage eine zugehörige Länge LE auf. Im vorliegenden Fall ist die Länge LE der Rutscheneinlage 42 gleich wie die Länge LR des Rutschenträgers.

Die Seitenwandungen 422 der Rutscheneinlage 42 sind derart dimensioniert, dass diese nicht über die Seitenwandungen 412 des Rutschenträgers 41 überstehen. Im vorliegenden Fall sind diese um die Distanz X zurückversetzt. Die Distanz X ist vorliegend 2 mm.

## Patentansprüche

1. Sortieranlage (100), insbesondere optische Sortieranlage, zum Entfernen von unerwünschten Elementen (21) aus einem Produktstrom (20), umfassend eine Zufuhreinrichtung (30), eine Rutscheinrichtung (40) sowie eine Detektionseinrichtung (50), **dadurch gekennzeichnet, dass** die Rutscheinrichtung (40) einen Rutschenträger (41) sowie eine den Rutschenträger (41) im Wesentlichen vollständig abdeckende Rutscheneinlage (42) aufweist.

2. Sortieranlage (100) nach Anspruch 1, wobei der Produktstrom (20) im Wesentlichen aus Flocken, Granulat oder Pellets aus Kunststoff, oder einer Mischung davon, besteht, wobei der Kunststoff PE, PP oder PET ist, und wobei die unerwünschten Elemente (21) im Produktstrom (20) aus einem, zum Material der Flocken, des Granulats oder der Pellets unterschiedlichen Material sind.

3. Sortieranlage (100) nach Anspruch 1 oder 2, **dadurch gekennzeichnet, dass** der Rutschenträger (41) einen U-förmigen Querschnitt, gebildet aus einer Grundplatte (411) und zwei Seitenwandungen (412, 413), aufweist.

4. Sortieranlage (100) nach Anspruch 3, **dadurch gekennzeichnet, dass** die Rutscheneinlage (42) einen zum Querschnitt des Rutschenträgers (41) geometrisch ähnlichen Querschnitt mit einer Grundplatte (421) und zwei Seitenwandungen (422, 423) aufweist, sodass innenliegende Oberflächen des Rutschenträgers (41) überdeckt sind.

5. Sortieranlage (100) nach einem der Ansprüche 1 bis 4, **dadurch gekennzeichnet, dass** der Rutschenträger (41) eine Länge (LR) und die Rutscheneinlage eine Länge (LE) aufweist, wobei die Länge (LE) gleich oder grösser ist als die Länge (LR).

6. Sortieranlage (100) nach einem der Ansprüche 4 bis 5, **dadurch gekennzeichnet, dass** die Grundplatte (421) der Rutscheneinlage (42) eben ist.

7. Sortieranlage (100) nach einem der Ansprüche 1 bis 6, **dadurch gekennzeichnet, dass** sämtliche auf die Rutscheinrichtung (40) einwirkende Kraft durch den Rutschenträger (41) aufgenommen wird und die Rutscheneinlage (42) im Wesentlichen keine äusseren Kräfte aufnimmt.

8. Sortieranlage (100) nach einem der Ansprüche 1 bis 7, **dadurch gekennzeichnet, dass** die Rutscheneinlage (42) eine Befestigungsvorrichtung (43, 43') aufweist.

9. Sortieranlage (100) nach Anspruch 8, **dadurch gekennzeichnet, dass** die Befestigungsvorrichtung (43, 43') in der Form einer Lasche, eines Hakens oder einer abgewinkelten Aufhängung ausgebildet ist.

10. Sortieranlage (100) nach einem der Ansprüche 1 bis 9, **dadurch gekennzeichnet, dass** die Rutscheneinlage (42) eine zweite Befestigungsvorrichtung zum Befestigen einer Absaugvorrichtung aufweist.

11. Sortieranlage (100) nach einem der Ansprüche 1 bis 10, **dadurch gekennzeichnet, dass** die Rutscheneinlage (42) aus einem metallischen Werkstoff, insbesondere Edelstahl, gefertigt ist.

12. Sortieranlage (100) nach einem der Ansprüche 1 bis 11, **dadurch gekennzeichnet, dass** die Rutscheneinlage (42) eine Oberflächenbeschichtung aufweist, insbesondere aus Polytetrafluorethylen (PTFE).

13. Verfahren zum Reinigen einer Sortieranlage (100), insbesondere einer Sortieranlage (100) nach einem der Ansprüche 1 bis 12, umfassend eine Rutscheinrichtung (40) mit einem Rutschenträger (41) sowie eine den Rutschenträger (41) vollständig abdeckende Rutscheneinlage (42), umfassend die Schritte:
- Anhalten des Produktstroms, insbesondere Stoppen und/oder Herunterfahren der Sortieranlage (100)
- Entfernen der verschmutzten Rutscheneinlage (42)
- Einbringen einer sauberen Rutscheneinlage (42')
- Hochfahren der Sortieranlage (100).

14. Verfahren nach Anspruch 13, **dadurch gekennzeichnet, dass** die zuvor entfernte Rutscheneinlage (42) gereinigt und zur erneuten Verwendung als saubere Rutscheneinlage (42') bereitgestellt wird.

15. Rutscheneinlage (42) zum Aufrüsten einer bestehenden Sortieranlage, wobei die Rutscheneinlage (42) einen zu einer Rutsche der bestehenden Sortieranlage geometrisch ähnlichen Querschnitt aufweist und insbesondere eine Befestigungsvorrichtung (43) zum Befestigen an der Rutsche der bestehenden Sortieranlage aufweist.
